# EUROPEAN PATENT APPLICATION

(11) **EP 1 655 669 A1**
(43) Date of publication of application: **10.05.2006**
(21) Application number: 04405687.7
(22) Date of filing: 09.11.2004
(51) Int. Cl.: G06F 17/12, G06F 17/50, H02J 13/00

(54) **Simulating voltages and currents of high or medium voltage power networks or switchyards**

(71) Applicant: ABB Technology AG, 8050 Zürich (CH)
(72) Inventor: Wimmer, Wolfgang, 5323 Rietheim (CH)
(74) Representative: ABB Patent Attorneys

(57) **Abstract**

The present invention is concerned with a simulation of voltages and currents of high or medium voltage switchyards and substations. It provides consistent and actual voltages and currents at the locations of the voltage and current transformers in the switchyard, and allows to update the former following any operational change such as the opening or closing of a switch. Voltage message and current messages are initialized with starting values of voltage or current distribution variables and routed along the paths of the topology according to certain rules.

## Description

### FIELD OF THE INVENTION

The invention relates to the field of engineering and design of high or medium voltage power networks and substations. It departs from a method of simulating voltages and currents of a power network or a switchyard in accordance with the preamble of the first independent patent claim.

### BACKGROUND OF THE INVENTION

High and medium voltage power networks, as well as switchyards or switching installations as part of substations for power distribution in such networks, include primary or field devices, such as electrical cables, lines, busbars, switches, generators, power transformers and instrument transformers. Any power network or switchyard including such devices or components can be represented in the form of an electrical circuit diagram on a screen or display, wherein the phases of an electrical three-phase system are generally combined into one single line, resulting in a so-called single-line electrical circuit diagram.

Appropriate coloring of the items or icons representing the conductors, i.e. the cables, lines and busbars, in an electrical circuit diagram of a switchyard by means of a color coding of voltage states is shown in the patent application EP-A 1 069 518. The voltage states of the conductors are determined based on momentary states of switches such as breakers and disconnectors, the voltages at the infeeding bays, as well as a topological model of the switchyard including certain component rules relating switch states to conductor states. The topological model is produced from a single-line diagram representing the components of a switchyard, and from generic and specific component data, i.e. component structure data, component rules and component parameters of individual components. The aforementioned patent application is incorporated herein by reference.

During an engineering or design phase of a switchyard, a simulation of the operational behavior of the latter, and in particular a simulation of the measurands as determined by the instrument transformers distributed over the switchyard, is needed. Hence, it is desirable to generate a set of consistent and actual voltages and currents at the locations of the voltage and current transformers in the switchyard, and to update the former following any operational change such as the opening or closing of a switch without reverting to connectivity matrices or laborious configuration tasks.

### DESCRIPTION OF THE INVENTION

It is therefore an objective of the invention to simulate voltages and currents of a power network or a switchyard based on an electrical circuit diagram of the former and to configure and update the simulation in a simple way. These objectives are achieved by a method, a computer program and a system for simulating voltages and currents of high or medium voltage power networks or switchyards as claimed in claims 1, 9 and 10, respectively. Further preferred embodiments are evident from the dependent patent claims.

According to the invention, a starting or initial voltage is assigned to a voltage message, the starting voltage corresponding to a voltage or a voltage difference at a starting point of a path in accordance with a switchyard topology. The voltage message is then propagated or routed along said path to a load, where a load current component is calculated based on a voltage assigned to the voltage message. The load current component in turn is assigned to a current message that is subsequently propagated backwards along said path. Whenever a voltage or current message is routed to or passes an instrument transformer, a voltage or current value assigned to the message is evaluated in order to simulate a voltage or current at the corresponding location of the instrument transformer.

In a preferred variant of the invention, the propagation of the messages is governed by certain rules. For instance, messages reaching an open switch are stopped. Likewise, voltage messages reaching an element that had been reached previously by the same voltage message are stopped, indicating the occurrence of a conductor loop. On the other hand, current messages reaching a node are duplicated, and the duplicates are sent backwards along all those paths that previously led a forward-travelling voltage message to said node. In this case, the current value assigned to the incoming current message is distributed among the outgoing duplicates in order to satisfy Kirchhoff's law.

Preferably, the voltage messages are initialized with a starting voltage that equals a voltage difference between the contacts of a closing switch, or a voltage drop over an element of the switchyard with a finite resistance. Propagating delta-voltage messages of this kind avoids the need for reset messages being flooded over the entire topology of the switchyard and resetting or clearing all previous voltage and current values.

In a further preferred embodiment of the invention, the simulated values are transferred or copied to a substation automation system for the purpose of testing the latter by providing consistent and updated measurement values simulating the behaviour of the corresponding real-scale switchyard.

### BRIEF DESCRIPTION OF THE DRAWINGS

The subject matter of the invention will be explained in more detail in the following text with reference to preferred exemplary embodiments which are illustrated in the attached drawings, in which:
Fig.1 schematically shows a breaker and a half single line diagram, and
Fig.2 depicts a flowchart of the process.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

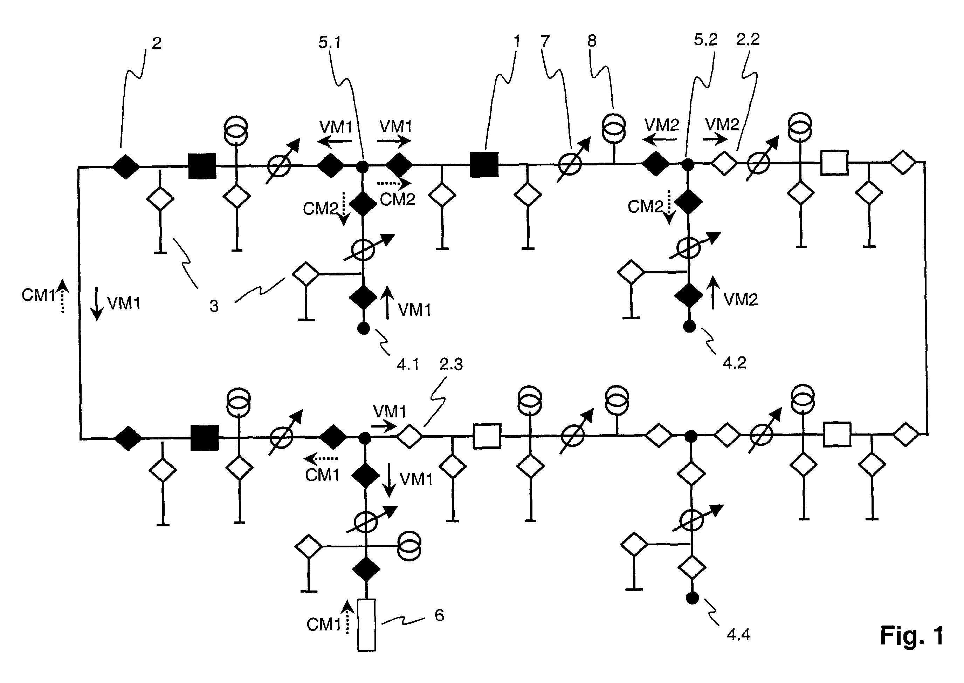

Fig.1 depicts an electrical single-line diagram of a switchyard as part of a substation. The topology represented in Fig.1 is called a "breaker and a half" topology with two diameters. The diagram comprises items or icons representative of various primary devices, such as circuit breakers 1, disconnectors 2, earthing isolators 3, line infeed or outgoing conductors 4, nodes 5, loads 6, current transformers 7, voltage transformers 8. Devices of the same kind are distinguished via a continued decimal digit, i.e. 5.1 and 5.2 denote two nodes. Generally, icons representative of open switches are shown outlined, whereas switches that are in a closed state are represented as black icons. Obviously, other topologies are conceivable, such as e.g. a double bus bar system with or without bypass busses, and the topologies may comprise other primary devices such as power transformers, generators or infeeding bays without limiting the applicability of the present invention. Likewise, the instrument transformers 7, 8 encompass any type of conventional or non-conventional instrument transformer or any other sensor for measuring the current and/or voltage at a particular location in a switchyard. In the following, the distinction between the primary devices and their representation by icons or elements in the electrical line diagram on a drawing board, computer screen or other display is neglected.

The inventive method of simulating a set of consistent voltages and currents for arbitrary switchyards requires, in a first or configuration step, the topological interconnection of the components of the switchyard as detailed above. Additionally, in a second or initialization step, the supply or infeed voltages V_{F} at a feeder 4 connected to a generator or a transmission grid, the location and resistance R_{L} of a load 6 connected to the switchyard, as well as switch states and transformer tap settings or conversion ratios have to be known. As the corresponding primary devices may have variable or changing characteristics, settings or states, or because a feeder connected to a transmission grid might become an outgoing conductor and vice versa, a plurality of simulations would be required to gain a useful picture of the operational behavior of the switchyard. According to the inventive method, a first or an updated set of instrument transformer outputs is produced automatically or instantly following a change in the state of one of the aforementioned elements.

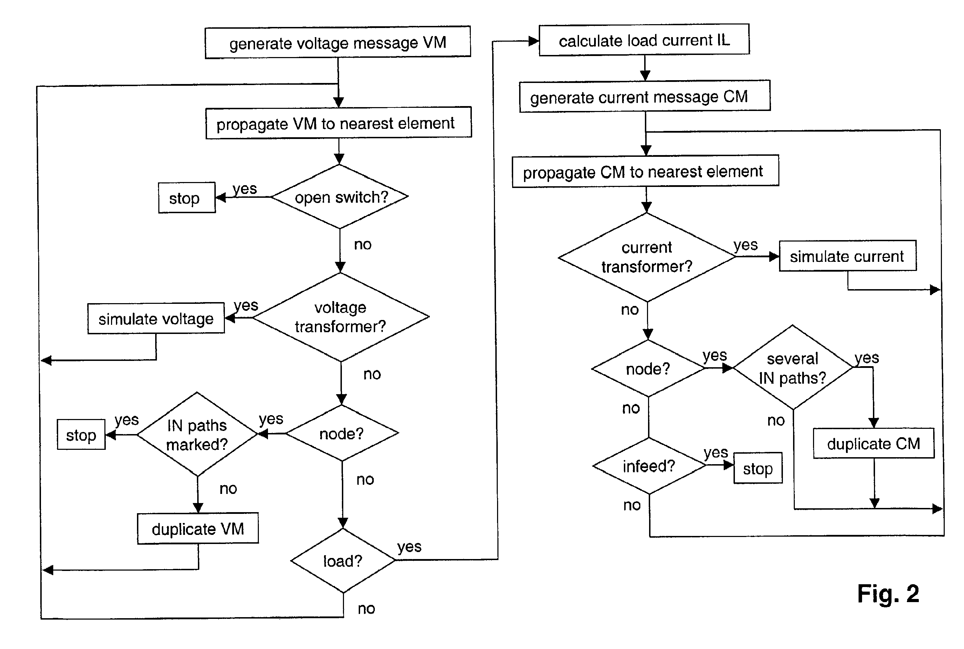

The simulation of the measured voltages and currents in the switchyard illustrated in Fig.1 involves the following basic steps as depicted in the flowchart of Fig.2. Following a change in a switch state, in a supply voltage or a load resistance, at every feeder 4.1, 4.2 a forward-propagating voltage message VM1, VM2 comprising a voltage distribution variable VDV1, VDV2 with an initial or starting value equal to the infeed voltage V_{F1}, V_{F2} of the respective feeder is generated. The voltage messages are spread or sent from the feeders 4.1, 4.2 along the path or paths of the electrical diagram as depicted by the arrows in Fig.1. If the voltage messages reach a node 5.1, 5.2 with more than one outgoing paths, copies of the former are re-distributed along all outgoing paths. The messages propagate or travel along the paths until they reach a neighboring element 1, 2, 5, 6 corresponding to a primary device of the switchyard.

At any element, the value of the voltage distribution variable VDV of the passing message may be stored, indicating the voltage level at the corresponding component of the switchyard. If the element is a voltage transformer 8, said value is preferably displayed or exploited in a subsequent application. The value of the voltage distribution variable is modified if the element reached by the voltage message demands to do so. For instance, if the element is a power transformer, the voltage distribution value of the voltage message is changed according to the transformer ratio and tap settings. If the voltage message reaches a feeder, or a switch in an open state, distribution of the message is stopped. The latter is the case e.g. at disconnectors 2.2 and 2.3 of Fig.1.

At any element, the path along which the voltage message has reached the element is marked "IN", thus tracing the propagation of the message. Occasionally, a voltage message may reach an element of which a different path has already been marked "IN" by the very same voltage message, or a copy of the latter emanating from the same feeder, that had passed at said element beforehand. In this case, the propagation of the later voltage message is stopped, assuming the presence of a conductor loop. Two voltage messages propagating along the same branch of the network in opposite directions will eventually meet. This is the case for the branch or section between nodes 5.1 and 5.2 in Fig.1, where two copies of the original voltage messages VM1, VM2 meet at one of the elements of the branch, e.g. at breaker 1. If a difference ΔV between the values of the two voltage distribution variables at said element is observed, a particular mediation procedure as detailed below has to be engaged.

Whenever a voltage message VM1 reaches a load element 6, the propagation of the voltage message stops for good. In exchange, knowing the resistance of the load, the load current I_{L} flowing through the load is calculated. A current message CM1 is generated, comprising a current distribution variable CDV with an initial value equal to the aforementioned load current I_{L}. As soon as all the voltage messages have come to a stop, the current message CM1 starts propagating along the path that previously led the voltage message VM1 to the load. At the same time, any other generated current message starts traveling backwards or upstream. From any element reached by a current message, the latter is re-distributed along any path marked as "IN" at the element, as is indicated by the dotted arrows in Fig.1.

If the current message reaches a power transformer, the value of the current distribution variable CDV of the current message is modified according to the transformer ratio. Whenever a current transformer 7 is reached by a current message CM1, the current distribution value of its current distribution variable is combined with any current display value already stored at and/or displayed by the current transformer. The two absolute current values are added or subtracted, depending on the respective current directions associated with the current message CM1 and the previous current display value.

At a node, the current distribution value of the current distribution variable of a current message CM1 is equally divided by the number of paths marked "IN" at the node, to ensure that the sum of the currents at the node is equal to zero. For instance, the current message CM1 reaches node 5.1 with a current distribution value equal to the load current I_{L} at load 6, whereas the current distribution variable CDV of the two current messages CM2 leaving node 5.1 each have a value that amounts to one half of said load current I_{L}.

Propagation of the current messages is stopped whenever a feeder is reached. Open switches should never be reached by a current message, as there should have been no voltage messages leaving the former in the first place.

Generally, after a change in the state of one of the elements of the switchyard, a reset message is generated and passed along all the paths of the topology. At every element, and in particular at the instrument transformers, any voltage or current values stored are set to zero, and any current direction is set to undefined. However, in certain cases, there will be no need to propagate a reset message along each and every path of the diagram. Instead, it may be sufficient to distribute a delta-voltage message DVM over a branch or section of the single line diagram. In particular if the action triggering the re-evaluation of the simulated values consists in the closing of a switch, the delta-voltage message is propagated along those branches that are linked to the one side of the switch that had the smaller voltage level prior to the closing. The initial or starting value of the voltage distribution variable of such a delta-voltage message is set equal to the voltage difference ΔV between the two contacts of the closing switch. Following this, a delta-current message DCM indicative of the supplemental current flowing in said branches is generated and propagated backwards or upstream. Likewise, upon opening of a switch the propagation of the reset message may be restricted to those branches of the diagram that are directly linked to the two sides of the switch.

So far, it was assumed that the conductors or busbars themselves do not represent any resistance. However, if the lines between two elements or the elements themselves are assigned a finite resistance, the reset messages and the evaluation of the "IN" paths may be even omitted altogether. Instead, only delta-voltage messages DVM are propagated, and the current direction is determined according to the voltage difference between the two ends of a path or between two nodes. Generally, if an element of finite resistance (other than the loads) is encountered by a forward propagating voltage message VM1, the former is ignored in a first step. However, if subsequently a backtracking current message CM1 reaches said element, a first delta-voltage message DVM1 propagating forward is generated. The initial value of its voltage distribution variable is set equal to the voltage drop ΔV caused by the current distribution value of the backtracking current message CM1 at said element and is indicative of the fact that the voltage distribution variable of the original voltage message VM1 had too high a value when it reached the load.

Whenever a first delta-voltage message DVM1, independently of its origin, reaches the load, a first delta-current message DCM1 is generated. The current distribution value of the DCM1 is given by the voltage distribution value of the first DVM1 at the load, and corresponds to a change in the load current as compared to the situation prior to the generation of the first delta-voltage message DVM1. The backtracking DCM1 occasionally reaches an element of finite resistance and thus causes a second voltage drop at the latter. Said second voltage drop is then made the initial value of the voltage distribution variable of a second delta-voltage message DVM2, again propagating forward and giving rise to a second delta-current message. This procedure may be repeated several times and is, in the present context, termed a recursive mediation procedure, allowing to resolve the abovementioned collision of two voltage messages with different voltage distribution values. Generation of a higher-order delta-current message is stopped whenever the distribution current value would be less than a predetermined minimum value of e.g. one quarter of the sensitivity of the current transformers. This procedure yields more realistic simulation results, but requires more configuration data and computational efforts, as distinctively more messages are distributed.

Apart from a root mean square (RMS) information about the current and voltages, phase information may be included at least in the current messages. With this type of phase information, in addition to resistive loads, both capacitive and inductive loads may be considered as well. Likewise, active and reactive power could be obtained from this information, thus simulating all measurements, except frequency, needed for switchyard operation. Furthermore, the internal resistance of a generator may be taken into account, thus rendering even more realistic the results of a simulation comprising the interconnection of two initially separated branches with distinct generator voltages.

Arbitrary single line diagrams of electrical switchyards can be viewed and edited by means of computer programs which also allow to operate the switches by changing their state, and subsequently colour the connecting lines according to the respective electrical potential, i.e. active (under voltage), passive (no voltage) or earth potential. Some computer programs such as those mentioned in the patent application referred to in the introductory part, even interlock certain switching operations correctly and automatically. Importing substation configuration language (SCL) files conforming e.g. to the standard IEC 61850-6, easily allows to represent the topology of the corresponding switchyard.

A computer-based implementation of the present invention involves a technique known as "message-passing" that comprises routing of messages along the single line topology connections of an electrical network. If the entire electrical network is stored in the memory of a single computer, message passing can be implemented by some internal method. However, if said network has sections or entire substations on several distinct computers, a message-passing interface (MPI) is required for the exchange of the messages between the different computers. A corresponding standard was developed by a group of industry, academic, and government representatives with experience in developing and using message-passing libraries on a variety of computer systems. A Message Passing Toolkit (MPT) fully compliant with the current MPI specification is, for instance, available from Silicon Graphics Inc. at http://www.sgi.com/products/software/mpt/overview.html. Accordingly, different parts or sections of a power network or switchyard topology may be represented by corresponding computer programs residing on several distinct but communicating data processing units, necessitating the abovementioned messages to be complemented with an indication regarding the location of certain elements of the topology, e.g. in the form of a computer identification or IP address.

Every multi-state element of the switchyard that has various states, settings or other characteristics as detailed above, is appended or assigned a software routine or object. The latter is capable of receiving messages, of processing these messages according to the actual state of the element, a state or flag of the software object itself, and a message type as detailed below. The software object is also capable of storing the value of the distribution current or voltage variable of the messages reaching the element.

By way of example, a voltage message has the following layout
Msg* = POINTER TO EXTENSIBLE RECORD

| | |
|---|---|
| next: Msg; | (* to be used in message queue *) |
| continue: BOOLEAN; | (* if FALSE, no further message distribution is done *) |
| from: TopModels.Topel; | (* direction of message propagation *) |
| to: TopModels.Topel; | (* direction of message propagation *) |
| mtyp: INTEGER; | (* the message type, e.g. reset, voltage, current *) |
| tns: INTEGER; | (* a transaction number identifying different message runs *) |
| prty: INTEGER; | (* sort criteria in message queue - lowest number first, pro-*) (* cess all voltage messages before any current messages *) |
| volt: REAL; | (* the distribution voltage to be distributed *) |

END;

The inventive method allows to compute a consistent set of measurement values at the locations of the voltage and current transformers of a real switching installation. The computed values are then displayed near the corresponding representations in the electrical diagram of the installation at an operator interface. This way, the engineering or design of the installation can be tested, its behavior can be simulated and demonstrated, and operators can be trained. By assigning a very low resistance to earthing switches and handling a close earthing switch like a load, even high currents resulting by earth faults can be simulated.

Further applications involve the simulated measurement values being fed or copied to a substation automation system or a user automation system via suitable interfaces such as an OPC server. Hence, consistent data sets are available and may be exploited for the purpose of testing or training of the automation systems, the interfaces and/or the secondary protection algorithms.

### LIST OF DESIGNATIOINS

- 1: circuit breaker
- 2: disconnector
- 3: earthing isolator
- 4: feeder or outgoing conductor
- 5: node
- 6: load
- 7: current transformer
- 8: voltage transformer
- VM: voltage message
- CM: current message

## Claims

1. A method of simulating a voltage or a current at the location of an instrument transformer (7, 8) in a high or medium voltage power network or switchyard, wherein the power network or switchyard comprises elements (1, 2, 5, 6) with variable operating states that are interconnected by lines, and wherein the power network or switchyard is represented by an electrical diagram comprising a path in accordance with a topology of the power network or switchyard,
**characterized in that** the method comprises
- assigning a starting voltage value (V_{F}, ΔV), corresponding to a voltage component at a starting point of the path, to a voltage distribution variable (VDV) of a voltage message (VM),
- routing the voltage message (VM) along the path to a load (6),
- calculating a current component (I_{L}) through the load (6) based on a load resistance (R_{L}) and a value of the voltage distribution variable (VDV) of the voltage message (VM) routed to the load (6),
- assigning the load current component (I_{L}) to a current distribution variable (CDV) of a current message (CM),
- routing the current message (CM) in the opposite direction along the path,
- simulating the voltage or the current at the location of the instrument transformer (7, 8) based on the value of the distribution variable (VDV, CDV) of a message (VM, CM) reaching said location.

2. The method according to claim 1, **characterized in that** it comprises
- stopping the propagation of the voltage message (VM1) if it reaches an open switch (2.2).

3. The method according to claim 1, **characterized in that** it comprises
- re-distributing a voltage message (VM) or a current message (CM) reaching a node of the power network or switchyard topology, and modifying the value of the current distribution variable (CDV) of the current message (CM) reaching the node, according to certain rules.

4. The method according to claim 1, **characterized in that** it comprises
- sending a reset message prior to the routing of the voltage message (VM).

5. The method according to claim 4, **characterized in that** the starting point of the path is a feeder (4.1, 4.2) of a switchyard and **in that** the starting voltage value (V_{F}) is an infeed or generator voltage.

6. The method according to claim 1, **characterized in that** it comprises
- propagating a delta-voltage message (DVM) with a starting voltage value equal to a voltage difference (ΔV) between the contacts of a closing switch.

7. The method according to claim 1, **characterized in that** it comprises
- propagating a delta-voltage message (DVM) with a starting voltage value equal to a voltage drop (ΔV) over an element of the power network or switchyard with a finite resistance.

8. The method according to one of the preceding claims, **characterized in that** it comprises
- transferring or copying the simulated voltages and/or the simulated currents at the locations of the instrument transformers to a substation automation system.

9. A computer program for simulating voltages and currents of high or medium voltage power networks or switchyards, which is loadable in and executable on a data processing unit and which computer program performs, when being executed by one or several communicating data processing units, the method according to one of the preceding claims.

10. A system for simulating a voltage or a current at the location of an instrument transformer (7, 8) in a high or medium voltage power network or switchyard comprising elements (1, 2, 5, 6) with variable operating states and interconnected by lines, and wherein the power network or switchyard is represented by an electrical diagram comprising a path in accordance with a topology of the power network or switchyard,
**characterized in that** the system comprises means for
- assigning a starting voltage value (V_{F}, ΔV), corresponding to a voltage component at a starting point of the path, to a voltage distribution variable (VDV) of a voltage message (VM),
- routing the voltage message (VM) along the path to a load (6),
- calculating a current component (I_{L}) through the load (6) based on a load resistance (R_{L}) and a value of the voltage distribution variable (VDV) of the voltage message (VM) routed to the load (6),
- assigning the load current component (I_{L}) to a current distribution variable (CDV) of a current message (CM),
- routing the current message (CM) in the opposite direction along the path,
- simulating the voltage or the current at the location of the instrument transformer (7, 8) based on the value of the distribution variable (VDV, CDV) of a message (VM, CM) reaching said location.
